# FASCICULE DE BREVET EUROPEEN

(11) **EP 2 574 908 B1**
(45) Date de publication et mention de la délivrance du brevet: **18.06.2014**
(21) Numéro de dépôt: 12186680.0
(22) Date de dépôt: 28.09.2012
(51) Int. Cl.: G01N 27/24, G01N 27/22

(54) **Dispositif de mesure de permittivité électrique sans fil et procédés mettant en oeuvre un tel dispositif**
Drahtloser Permittivitätssensor und Verwendung einer solchen Vorrichtung
Wireless permittivity sensor and method employing such a device

(30) Priorité: 28.09.2011 FR 1158690
(43) Date de publication de la demande: 03.04.2013
(73) Titulaire: Airbus Operations, 31060 Toulouse (FR); Airbus, 31700 Blagnac (FR)
(72) Inventeur: De Smet, Marie Anne, 32600 Monbrun (FR); Kierbel, Daniel, 31400 Toulouse (FR)
(74) Mandataire: Santarelli

(56) Documents cités:
- EP-A1- 2 233 920
- EP-A1- 2 336 758
- US-A- 5 219 498
- US-A1- 2011 226 041
- K. DURGA PRASAD ET AL: "Wireless Sensor Networks - A potential tool to probe for water on Moon", ADVANCES IN SPACE RESEARCH, vol. 48, no. 3, 1 août 2011 (2011-08-01), pages 601-612, XP055021916, ISSN: 0273-1177, DOI: 10.1016/j.asr.2011.04.004
- "5TE Water Content, EC and Temperature Sensors Operator's Manual", Decagon Devices, Inc. , 1 janvier 2010 (2010-01-01), XP055022138, Extrait de l'Internet: URL:www.decagon.com/assets/Manuals/5TE-Man ual.pdf [extrait le 2012-03-16]

## Description

La présente invention concerne un dispositif de mesure de permittivité électrique sans fil.

Le domaine de la présente invention est la détection de défauts dans des structures en matières composites, notamment des matières synthétiques composites comme par exemple des matériaux synthétiques intégrant des fibres et obtenus par polymérisation.

Il est connu de réaliser une mesure de permittivité pour suivre un procédé de polymérisation de résine et de matériaux composites. Le document US-5,219,498 révèle par exemple un tel procédé.

Dans le domaine aéronautique, il est connu d'utiliser un capteur diélectrique afin de détecter la présence de glace ou de givre sur un aéronef, une telle application d'un capteur diélectrique est décrite dans le document FR-2 904 603.

La combinaison d'un capteur diélectrique avec un moyen de communication sans fil est connue, voir p. ex. Durga Prasat et al., Advances in Space Research 48 (2011) 601-612 ou US 2011/0226041.

Cependant, les dispositifs de l'art antérieur ne permettent pas de réaliser à la fois un suivi du procédé de polymérisation et de détecter l'apparition de défauts lors de l'utilisation d'un composant en matériau composite.

L'idée à la base de l'invention est qu'un capteur diélectrique, ou un dispositif de mesure de permittivité, peut être utilisé lors de la polymérisation d'un matériau composite afin de s'assurer de la bonne polymérisation du matériau. Une mesure de même type peut par la suite être réalisée pour vérifier le bon état du matériau au cours de son utilisation. Une mesure de permittivité permet notamment de détecter une délamination qui survient par exemple suite à un choc ou lorsque le matériau a été soumis à des contraintes importantes.

Le but de la présente invention est de fournir des moyens autonomes pour réaliser une mesure de permittivité d'un matériau composite, par exemple lors de la fabrication - polymérisation - de ce matériau, puis ensuite au cours de la vie de ce matériau.

À cet effet, la présente invention vise un dispositif de mesure de permittivité électrique comportant une première électrode (une anode), une seconde électrode (une cathode) distante de la première électrode, des moyens permettant de créer un champ électrique à partir de la première électrode et des moyens d'analyse d'un signal électrique reçu par la seconde électrode. Ce dispositif de mesure comporte en outre des moyens de transmission par radiofréquence de données, ainsi que des moyens de communication entre les moyens d'analyse d'un signal électrique reçu par la seconde électrode et les moyens de transmission par radiofréquence de données.

Selon la présente invention, ce dispositif comporte :
- un premier ensemble présentant la première électrode, les moyens permettant de créer un champ électrique à partir de la première électrode, ainsi qu'une première antenne RFID (acronyme de l'anglais Radio Frequency Identification, soit en français radio-identification) associée à une première capacité, et
- un second ensemble présentant la seconde électrode, les moyens d'analyse du signal électrique reçu par la seconde électrode, ainsi qu'une deuxième antenne RFID associée à une deuxième capacité.

On réalise de la sorte un capteur autonome permettant de mesurer une permittivité - ou une conductivité électrique - qui peut réaliser localement la mesure de permittivité en analysant le signal électrique reçu par la seconde électrode, et qui peut en outre être géré à distance tant en ce qui concerne son alimentation en énergie que pour la transmission des résultats des mesures effectuées.

Un tel dispositif permet de réaliser des mesures de permittivité au travers d'un matériau, notamment lorsque les électrodes du dispositif sont distantes l'une de l'autre de plusieurs millimètres ou plusieurs centimètres.

Le fait d'avoir un capteur (dispositif de mesure) autonome, sans fil, permet de faciliter sa mise en oeuvre et aussi la lecture des résultats obtenus. Il devient envisageable d'implanter un dispositif de mesure selon la présente invention sur une pièce en matière composite, ou au coeur de celle-ci, afin de faire des mesures de permittivité lors de la fabrication de ladite pièce, notamment au cours d'une étape de polymérisation, mais aussi ultérieurement lors de l'utilisation de la pièce. Toutes ces mesures peuvent alors être réalisées sans avoir à intervenir sur la pièce et à tout moment, ponctuellement ou selon une fréquence prédéterminée.

Dans un dispositif de mesure de permittivité électrique selon la présente invention, les moyens de transmission par radiofréquence utilisent par exemple la technologie RFID et comportent alors de préférence une antenne se présentant sous la forme d'une bobine, ainsi qu'une capacité associée à l'antenne. Cette technologie est particulièrement bien adaptée à la présente invention car elle permet, d'une part, d'alimenter sans contact en énergie le dispositif de mesure et, d'autre part, de transmettre des données de manière fiable. En outre, les distances de transmission d'énergie et de données sont bien adaptées, et adaptables, à la réalisation de mesures lors de processus de fabrication et dans un ensemble mécanique assemblé.

Pour avoir un dispositif de mesure de permittivité électrique compact, il est prévu que les moyens permettant de créer un champ électrique, les moyens d'analyse d'un signal électrique et les moyens de communication sont avantageusement regroupés au sein d'un microcontrôleur.

De préférence, le premier ensemble comprend un microcontrôleur intégrant au moins les moyens permettant de créer un champ électrique et le second ensemble comprend un microcontrôleur intégrant au moins les moyens d'analyse du signal électrique.

Un dispositif de mesure de permittivité électrique selon l'invention peut également comporter une mémoire non volatile, avec de préférence une mémoire au sein de chacun des ensembles. Ainsi, des valeurs mesurées peuvent par exemple être mémorisées au sein du dispositif de mesure.

Un dispositif de mesure de permittivité électrique selon l'invention peut être un dispositif actif et comporter une source d'alimentation en énergie autonome mais il peut également s'agir d'un dispositif passif qui n'est alimenté en énergie par exemple que par un dispositif de type lecteur RFID.

Un dispositif de mesure de permittivité électrique selon la présente invention peut se présenter sous une forme étagée comportant un premier niveau avec la première électrode et la seconde électrode disposées de manière coplanaire et un second niveau avec une antenne plane et des moyens électroniques, une couche de matériau isolant électrique étant disposée entre le premier niveau et le second niveau, et le second niveau étant recouvert d'un matériau isolant thermique. Cette forme de réalisation permet d'avoir un dispositif de dimensions réduites. Elle est adaptée à une mesure locale de permittivité.

Dans le cas où le dispositif comprend un premier et un second ensemble, le premier ensemble se présente de préférence sous une forme étagée comportant un premier niveau avec la première électrode et un second niveau avec au moins l'antenne plane, une couche de matériau isolant électrique est disposée entre le premier niveau et le second niveau, et le second niveau est de préférence recouvert d'un matériau isolant thermique. De préférence, le second ensemble se présente sous une forme étagée comportant un premier niveau avec la deuxième électrode et un second niveau avec au moins l'antenne plane, une couche de matériau isolant électrique est disposée entre le premier niveau et le second niveau, et le second niveau est recouvert d'un matériau isolant thermique.

Pour réaliser des mesures de permittivité au travers d'un matériau, notamment lorsque les électrodes du dispositif sont distantes l'une de l'autre de plusieurs millimètres ou plusieurs centimètres, le premier ensemble et le second ensemble sont de préférence reliés tous deux à une masse commune.

Le dispositif de mesure de permittivité peut ainsi être mis en oeuvre dans un procédé de détection de défauts dans un composant en matériau synthétique polymère composite d'une structure, comme par exemple un panneau, comportant les étapes suivantes :
- mise en place d'au moins un dispositif de mesure de permittivité électrique tel que décrit plus haut à la surface du composant avant polymérisation du matériau,
- polymérisation du matériau et finition de la structure,
- montage de la structure dans un ensemble fonctionnel,
- interrogation du dispositif de mesure de permittivité électrique à l'aide d'un lecteur de type RFID,
- transmission d'un résultat de mesure de permittivité électrique obtenu lors de l'étape précédente à un dispositif de gestion et de contrôle de l'ensemble fonctionnel.

Un tel procédé comporte en outre avantageusement une étape d'interrogation du dispositif de mesure de permittivité électrique lors de l'étape de polymérisation du matériau par un lecteur de type RFID.

Dans ce procédé de détection de défauts, il est proposé plusieurs manières de disposer une anode et une cathode pour réaliser une mesure de permittivité. Il est ainsi par exemple prévu :
- qu'une anode d'un dispositif de mesure de permittivité électrique soit introduite dans une zone du composant saturée en résine, et qu'une cathode soit disposée perpendiculairement à l'anode, ou
- qu'une anode et une cathode d'un dispositif de mesure de permittivité électrique s'étendent chacun sur un bord du composant sur toute la hauteur de celui-ci, ou
- qu'une anode et une cathode d'un dispositif de mesure de permittivité électrique soient disposés chacune sur un bord du composant à une distance prédéterminée d'une même face dudit composant.

Est également concerné un composant réalisé en matériau synthétique composite, comportant au moins un dispositif de mesure de permittivité électrique tel que décrit ci-dessus.

Selon un exemple de réalisation, le matériau synthétique composite comprend au moins deux plis, et l'anode et la cathode recouvrent chacune au moins partiellement un pli, ce qui permet d'avoir une mesure locale.

Selon un autre exemple de réalisation, dans un composant en matériau synthétique composite comprenant au moins deux plis, l'anode et/ou la cathode est située entre deux des plis.

Et enfin, est concerné un aéronef, intégrant au moins un tel composant.

Des détails et avantages de la présente invention ressortiront mieux de la description qui suit, faite en référence aux dessins schématiques annexés sur lesquels :
La figure 1 illustre schématiquement un principe de base, déjà connu, sur lequel repose la présente invention,
La figure 2 illustre schématiquement un dispositif selon un mode de réalisation de la présente invention appliqué par exemple à la détection d'une délamination dans un matériau composite,
La figure 3 illustre sous forme d'un schéma blocs un dispositif de mesure de permittivité électrique passif selon un mode de réalisation de la présente invention, La figure 4 correspond à la figure 3 pour un dispositif de mesure actif,
La figure 5 illustre schématiquement une variante de réalisation d'un dispositif de mesure passif,
La figure 6 illustre une variante de dispositif de mesure selon un mode de réalisation de la présente invention en communication avec un lecteur RFID,
La figure 7 est un schéma blocs illustrant un microcontrôleur pouvant être utilisé dans un dispositif de mesure selon la présente invention,
La figure 8A est une vue schématique en perspective d'un dispositif de mesure selon un mode de réalisation de la présente invention,
La figure 8B est une vue de dessus d'une antenne du dispositif de la figure 8A,
La figure 8C est une vue schématique des électrodes du dispositif de mesure illustré sur la figure 8A,
La figure 9 est une vue de dessus d'une variante de réalisation d'un dispositif selon un mode de réalisation de la présente invention,
La figure 10 illustre un procédé de l'art antérieur pour une mesure de permittivité dans une structure réalisée dans un matériau composite,
La figure 11 illustre schématiquement un procédé de détection d'un défaut dans une structure en matériau composite selon la présente invention,
La figure 12 illustre schématiquement une première application d'un dispositif de mesure selon la présente invention,
La figure 13 illustre schématiquement une seconde application de dispositifs de mesure selon la présente invention,
La figure 14 illustre le positionnement d'électrodes d'un dispositif de mesure de permittivité électrique selon la présente invention sur une structure réalisée en matériau composite, et
Les figures 15 et 16 sont des figures équivalentes à la figure 14 pour des variantes selon la présente invention.

On suppose dans la description qui suit que la technologie dite RFID (de l'acronyme anglais Radio Frequency Identification, soit en français radio-identification) est connue de l'homme du métier et seuls les grands principes seront repris ici.

Ainsi, la technologie RFID est une technologie qui permet de réaliser sans contact une identification. Cette technologie met en oeuvre une étiquette appelée également tag ou bien encore identifiant ainsi qu'un lecteur. Sans que le lecteur rentre en contact avec l'étiquette, la technologie RFID permet un transfert d'énergie du lecteur vers l'étiquette et un échange de données bidirectionnel entre ces deux éléments. Ces échanges sont réalisés grâce à l'établissement d'un champ électromagnétique entre une antenne implantée au niveau du lecteur et une autre antenne implantée au niveau de l'étiquette.

Un couplage essentiellement inductif ou essentiellement électrique est réalisé entre le lecteur et l'étiquette correspondante. Le couplage inductif est utilisé notamment lorsque le lecteur est proche de l'étiquette (distances allant de quelques centimètres à quelques mètres). Les échanges par radiofréquence entre les éléments du système RFID se font alors à une fréquence de 125 kHz ou de 13,56 MHz. L'antenne de chaque élément est alors une bobine. Dans le cas d'un couplage électrique, l'antenne est généralement un conducteur filaire et la fréquence utilisée est comprise entre 860 et 950 MHz ou bien encore 2,45 GHz.

Dans la suite de la description, il sera plutôt question de systèmes RFID utilisant un couplage magnétique mais un couplage électrique pourrait bien entendu également être envisagé.

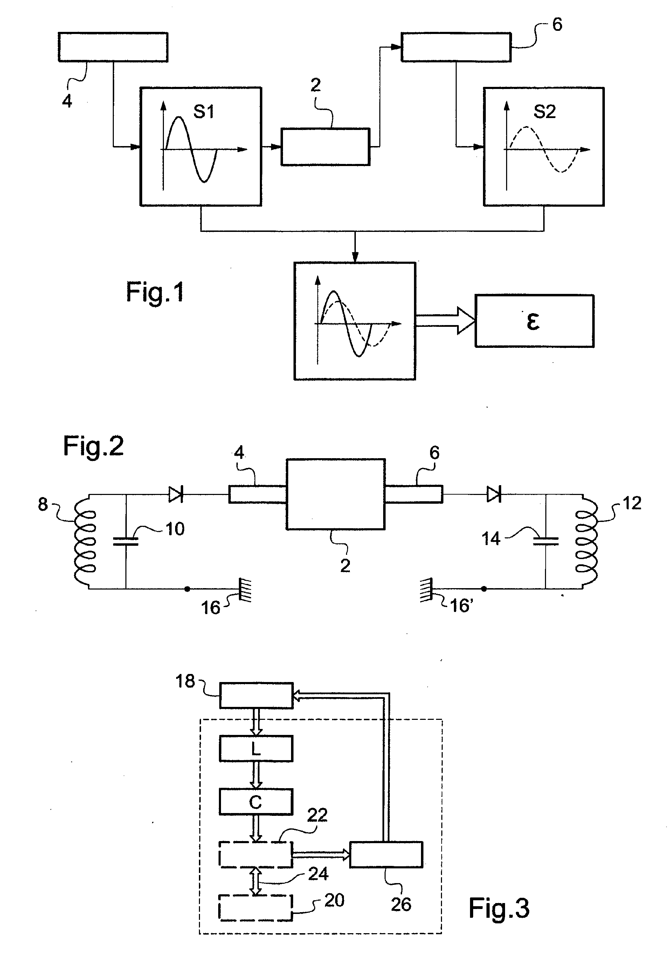

La figure 1 illustre de manière schématique quant à elle un principe physique permettant la mesure de la permittivité électrique d'un composant 2. Il est connu que la mesure de cette permittivité permet de déterminer, pour un matériau composite, l'état de celui-ci. On considère ici comme matériau composite un matériau synthétique dans lequel des fibres, telles par exemple des fibres de carbone ou d'aramide sont noyées dans une résine d'un matériau polymère. Pour réaliser un tel matériau, les différents composants sont assemblés puis le matériau est disposé dans un autoclave, ou similaire, afin de réaliser la polymérisation de la résine. On obtient alors un matériau rigide qui peut être utilisé pour réaliser un élément structurel.

Une première électrode, appelée par la suite anode 4, est excitée de manière à créer un champ électrique variable illustré schématiquement par une courbe S1 à gauche du composant 2. On suppose que l'anode 4 est directement au contact du composant 2. Le champ électrique (illustré par S1) crée une polarisation électrique dans le composant 2. Une seconde électrode, appelée par la suite cathode 6, est placée directement au contact elle aussi du composant 2 à distance de l'anode 4. La cathode 6 reçoit alors un signal S2. Pour déterminer la permittivité du composant 2, le signal S2 est analysé par rapport au champ électrique crée dans le composant comme illustré sur la figure 1. Un calcul par éléments finis permet alors d'obtenir la permittivité ε.

La présente invention propose de mettre en oeuvre ce principe de mesure de permittivité en le combinant à la technologie RFID. La figure 2 illustre schématiquement un dispositif de mesure selon la présente invention.

Sur cette figure 2, on reconnaît une anode 4 venant au contact direct d'un composant 2 en matière composite. Une cathode 6 est également au contact direct du composant 2. La conductivité de l'anode 4 et celle de la cathode 6 sont très supérieures à la conductivité du matériau constituant le composant 2. On choisira alors par exemple des électrodes métalliques.

Une première antenne 8 présentant une forme bobinée est montée en parallèle avec une première capacité 10. Cette première antenne 8 est l'antenne d'un récepteur (étiquette) RFID. Lorsqu'un lecteur RFID (identifié par la suite lecteur 18) entre en communication avec la première antenne 8, un transfert d'énergie s'effectue en direction du récepteur et cette énergie est stockée dans la première capacité 10. Cette énergie électrique transmise par le lecteur 18 est utilisée pour créer un champ électrique variable illustré par la courbe S1 de la figure 1 au niveau de l'anode 4. Le signal S2 (représenté figure 1) est alors induit au niveau de la cathode 6. L'anode 4, son antenne 8 et sa capacité 10, reliées à une masse 16, font ainsi partie du premier ensemble.

On trouve du côté de la cathode 6 une seconde antenne 12 en parallèle avec une seconde capacité 14, reliées aussi à une masse 16', faisant partie du second ensemble.

Cette seconde antenne 12 est utilisée pour transférer le résultat de la mesure effectuée vers un lecteur RFID. Il peut s'agir du même lecteur RFID 18 que celui qui est en communication avec la première antenne 8 ou bien d'un autre lecteur. On n'a pas représenté sur la figure 2 les moyens permettant de faire la mesure de la permittivité électrique du composant 2.Pour obtenir de bons résultats de mesure, il est toutefois possible que la première antenne 8 en liaison avec l'anode 4 soit par ailleurs à la masse avec une masse commune à celle de la seconde antenne 12 en liaison par ailleurs avec la cathode 6.

La figure 3 représente schématiquement un des deux ensembles du dispositif de mesure de permittivité selon la présente invention avec un lecteur 18 associé.

Le dispositif de mesure comporte un capteur diélectrique 20, c'est-à-dire ici notamment l'anode 4 ou la cathode 6. Ce capteur est en liaison avec un microcontrôleur 22. Une double flèche 24 entre le capteur diélectrique 20 et le microcontrôleur 22 illustre l'envoi d'un signal généré par le microcontrôleur 22 vers le capteur diélectrique 20 et la réception par le microcontrôleur 22 d'un signal induit en provenance du capteur diélectrique 20.

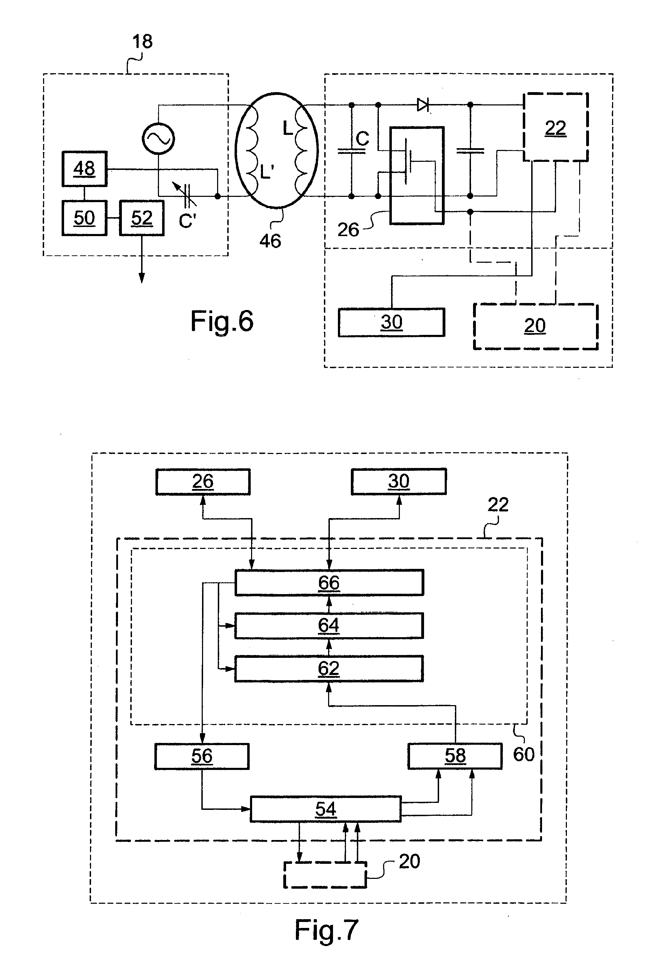

Le microcontrôleur 22 est un circuit intégré rassemblant un microprocesseur, au moins une mémoire et des périphériques de communication. Ce microcontrôleur 22 sera décrit plus en détails en référence à la figure 7. Ce microcontrôleur 22 sert ici d'interface avec le capteur diélectrique 20 et calcule également la permittivité électrique à mesurer à l'aide de ce capteur diélectrique 20.

On a également représenté sur cette figure 3 une antenne, i.e. une bobine formant une inductance L et servant d'antenne réceptrice, une capacité C permettant d'accumuler de l'énergie reçue par l'inductance L, ainsi qu'une interface 26 avec le lecteur 18, cette interface 26 intégrant éventuellement une antenne distincte de l'inductance L. Cette interface 26 correspond ainsi aux moyens de transmission par radiofréquence de données. Ainsi, l'antenne L et la capacité C correspondent soit à l'antenne 8 et capacité 10 de la figure 2 si le capteur 20 comprend une anode 4, soit à l'antenne 12 et capacité 14 de la figure 2 si le capteur 20 comprend une cathode 6,

Le dispositif de mesure de permittivité représenté sur la figure 3 est un dispositif passif car il ne possède pas de source d'énergie interne. L'énergie nécessaire au fonctionnement du dispositif de mesure représenté sur cette figure est fournie par le lecteur 18. Lorsque celui-ci émet un signal électromagnétique, un couplage inductif est réalisé avec l'inductance L et de l'énergie est ainsi transférée vers le dispositif de mesure (délimité schématiquement par le cadre en traits pointillés).

L'inductance L reçoit donc le signal émis par le lecteur 18 et l'énergie transmise par le lecteur 18 est emmagasinée sous forme de charge électrique dans la capacité C. Lorsque la charge de cette capacité est suffisante, l'énergie correspondante est fournie au microcontrôleur 22. Celui-ci peut alors générer un signal qui est transmis au capteur diélectrique 20 dans le cas où il s'agit de l'ensemble comprenant l'anode 4. Il traite ensuite le signal reçu en retour de ce capteur diélectrique 20 dans le cas où il s'agit de l'ensemble comprenant la cathode 6. Le résultat issu du traitement de signaux réalisés par le microcontrôleur 22 est alors communiqué sous forme de données à l'interface 26. Comme indiqué plus haut, cette dernière possède son antenne propre. Toutefois, il est également envisageable d'utiliser l'inductance L comme antenne pour transmettre les données correspondant aux résultats de la mesure effectuée à l'aide du capteur diélectrique 20 et du microcontrôleur 22 au lecteur 18.

Entre le lecteur 18 et le dispositif de mesure, un échange de données, bidirectionnel, est également réalisé afin que le lecteur 18 et le dispositif de mesure, qui correspond ici à une étiquette RFID, s'identifient et se reconnaissent l'un l'autre. Un tel échange et un tel processus d'identification sont classiques dans un système de type RFID.

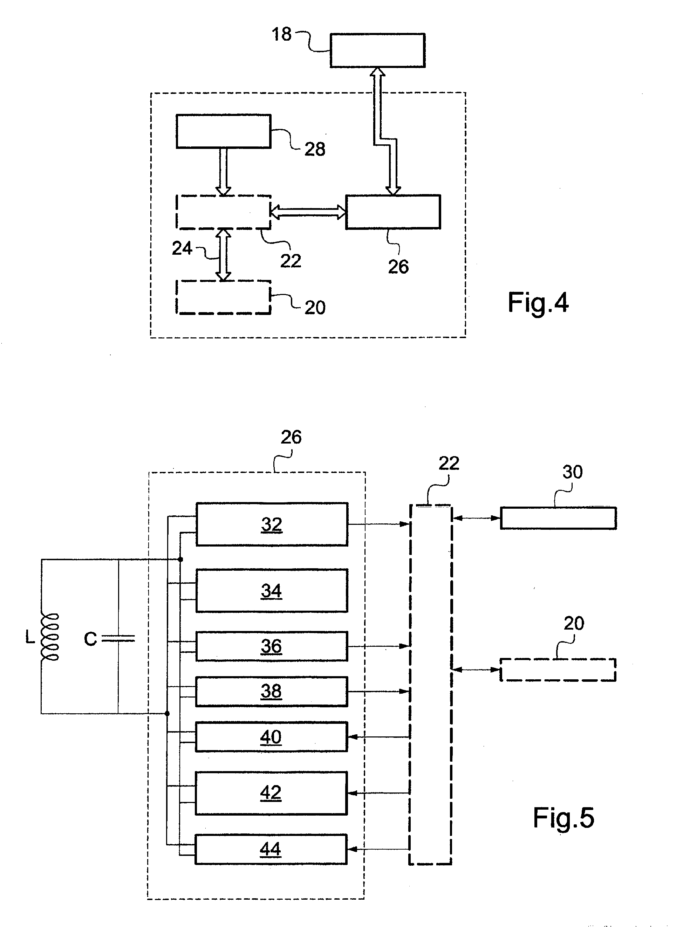

La figure 4 illustre une variante de réalisation du dispositif de mesure de la figure 3. Il s'agit ici non plus d'un dispositif de mesure passif mais d'un dispositif de mesure actif. On a en effet ici à l'intérieur du dispositif de mesure une pile 28, ou tout autre dispositif similaire permettant de fournir de l'énergie électrique. Cette pile 28 alimente en énergie électrique le microcontrôleur 22. De même que dans la forme de réalisation de la figure 3, le microcontrôleur 22 est en liaison avec le capteur diélectrique 20, qui comprend une anode 4 ou une cathode 6 pour réaliser la mesure de permittivité proprement dite. L'interface 26, en tant que moyen de transmission, comporte ici une antenne pour communiquer avec le lecteur 18. On a ici un lien bidirectionnel entre l'interface 26 et le lecteur 18 de même qu'entre le microcontrôleur 22 et l'interface 26. On réalise ainsi un échange de données pour l'identification entre le lecteur 18 et le dispositif de mesure en tant qu'étiquette RFID ainsi que la transmission du dispositif de mesure vers le lecteur 18 du résultat de la mesure de permittivité effectuée.

Sur la figure 5, on a repris un dispositif de mesure de dispositif passif tel celui de la figure 3 dans lequel on suppose qu'une même inductance L, associée à sa capacité C, est utilisée comme antenne pour recevoir de l'énergie d'un lecteur RFID 18 (non représenté sur cette figure) et pour échanger des données avec ce lecteur 18. La figure 5 montre plus en détail l'interface 26 du dispositif de mesure de la figure 3.

Est également représenté sur cette figure 5 le microcontrôleur 22 et le capteur diélectrique 20 de la figure 3, ainsi qu'une mémoire 30 associée au microcontrôleur 22.

L'interface 26 comporte plusieurs modules remplissant chacun diverses fonctions pour permettre les échanges entre l'antenne (L) et le microcontrôleur.

Un premier module est un module d'initialisation 32 qui gère les mises en marche et arrêts du dispositif de mesure en fonction de l'énergie reçue au niveau de l'antenne (L) du dispositif.

Un second module, ou stabilisateur 34, agit pour rectifier et stabiliser le signal reçu par l'antenne (L). Ce module agit uniquement au sein de l'interface 26 et n'est pas en communication avec le microcontrôleur 22.

Avantageusement, une horloge 36 est prévue dans l'interface 26. Celle-ci permet alors de dater les mesures effectuées par le capteur diélectrique 20.

L'interface 26 comporte bien évidemment également un démodulateur 38 et un modulateur 40. Le démodulateur 38 permet de convertir le signal analogique reçu par l'antenne (L), en un signal numérique pouvant être traité par le microcontrôleur 22. De même, le modulateur 40 permet de convertir des informations numériques données par le microcontrôleur 22 en un signal analogique pouvant être transmis par l'antenne (L).

Une gestion dynamique de la puissance du dispositif de mesure de permittivité est réalisée au sein d'un module de gestion de la puissance 42 se trouvant lui aussi dans l'interface 26.

Enfin, cette interface 26 contient un module anticollision 44 qui est utilisé notamment lorsqu'un lecteur RFID 18 doit communiquer avec plusieurs dispositifs de mesure à des fréquences distinctes.

La figure 6 a pour but de montrer plus en détail un lecteur 18 pouvant être associé à un dispositif de mesure de permittivité selon la présente invention. Sur la droite de la figure 6, on a représenté un ensemble d'un tel dispositif de mesure. Dans celui-ci, on a représenté le capteur diélectrique 20 (qui comprend une anode 4 s'il s'agit du premier ensemble ou une cathode 6 s'il s'agit du second), le microcontrôleur 22 et une mémoire 30. L'interface 26 est ici représentée sous forme simplifiée. La mémoire 30 est par exemple une mémoire morte effaçable et programmable électriquement, connue plus couramment sous l'acronyme EEPROM (de l'anglais Electrically Erasable Programmable Read Only Memory).

On retrouve bien entendu du côté du dispositif de mesure une antenne avec notamment une inductance L. Le lecteur 18 comporte de son côté également une inductance L'. Lorsque l'inductance L' est excitée, un couplage inductif, symbolisé par un ovale 46, est réalisé au niveau des antennes du lecteur et du dispositif de mesure.

Dans la forme de réalisation prévue sur la figure 6, le lecteur 18 comporte une capacité C' variable qui permet ainsi d'émettre des signaux à différentes fréquences.

La structure de ce lecteur 18 est connue de l'art antérieur. On trouve ainsi dans ce lecteur un filtre passe-bande 48, un amplificateur 50 et un démodulateur 52. On s'intéresse ici uniquement à la partie du lecteur 18 permettant de lire les données correspondant aux résultats des mesures effectuées par le dispositif de mesure de permittivité selon la présente invention. On retrouve en effet dans le lecteur 18 également des moyens d'échange (non représentés) de données pour ce qui concerne le procédé d'identification (connu de l'art antérieur) entre un lecteur RFID et une étiquette correspondante, ici le dispositif de mesure.

La figure 7 illustre quant à elle le microcontrôleur 22. Sur cette figure, on a représenté le microcontrôleur 22 en communication avec le capteur diélectrique 20 (qui comprend l'anode ou la cathode selon l'ensemble considéré) et relié également à l'interface 26 ainsi qu'à la mémoire 30. Cette dernière est par exemple ici aussi une mémoire de type EEPROM.

Comme indiqué précédemment, le microcontrôleur 22 permet au sein du dispositif de mesure de permittivité de réaliser le traitement du signal permettant de déterminer la permittivité à mesurer. Ainsi, le microcontrôleur 22 comporte tout d'abord une interface 54 pour communiquer avec le capteur diélectrique 20. Cette interface 54 envoie un signal au capteur diélectrique 20 et reçoit en retour des signaux des électrodes du capteur diélectrique 20. Le signal d'excitation transmis par l'interface 54 au capteur diélectrique 20 est généré par un générateur de fréquence 56 intégré au microcontrôleur 22, notamment lorsqu'il s'agit du premier ensemble. Le générateur de fréquence 56 constitue ainsi, au moins en partie, les moyens permettant de créer un champ électrique à partir de l'anode 4.

Les signaux qui sont reçus du capteur diélectrique 20 par l'interface 54 sont quant à eux transmis à un convertisseur A/D 58 qui transforme les signaux analogiques reçus en des signaux numériques. Ces derniers peuvent être alors traités au niveau d'une puce 60 qui comporte un module de traitement de signaux numériques 62 dans lequel les signaux convertis sont introduits.

Les données ainsi traitées sont alors introduites dans un module de calibration et de comparaison 64 dans lequel les valeurs en provenance des signaux sont mises en forme de manière à pouvoir être comparées à des valeurs contenues dans des tables mémorisées au sein de la puce 60. Le module de traitement de signaux numériques 62 et le module de calibration et de comparaison 64 constituent ainsi, au moins en partie, les moyens d'analyse du signal électrique reçue par la cathode 6. Le résultat en sortie de ce module 64 correspond à la permittivité mesurée. Cette valeur est alors communiquée à un dispositif de gestion et de communication 66. Le dispositif de gestion et de communication 66 constitue, au moins en partie, des moyens de communication entre les moyens d'analyse (62, 64) du signal électrique reçu par la seconde électrode 6 et les moyens de transmission par radiofréquence de données, comprenant au moins l'interface 26. Ce dispositif de gestion et de communication 66 communique alors avec l'interface 26 afin de transmettre la valeur mesurée au lecteur 18 correspondant. Ce dispositif de gestion et de communication 66 peut également échanger des données avec la mémoire 30. Il gère également les identifications avec ce lecteur 18 ainsi que les ordres de mesure. Ainsi, ce dispositif de gestion et de communication 66 est également en lien avec le générateur de fréquence 56 et les autres modules de la puce 60, à savoir le module de traitement des signaux numériques 62 et le module de calibration et de comparaison 64. Avec un tel microcontrôleur 22, les mesures de permittivité peuvent ainsi être réalisées au sein d'un dispositif qui peut être assimilé à une étiquette RFID. Un tel microcontrôleur 22 peut être intégré tout aussi bien dans un dispositif de mesure de permittivité passif (comme illustré par exemple sur la figure 3) que dans un dispositif actif tel celui représenté sur la figure 4.

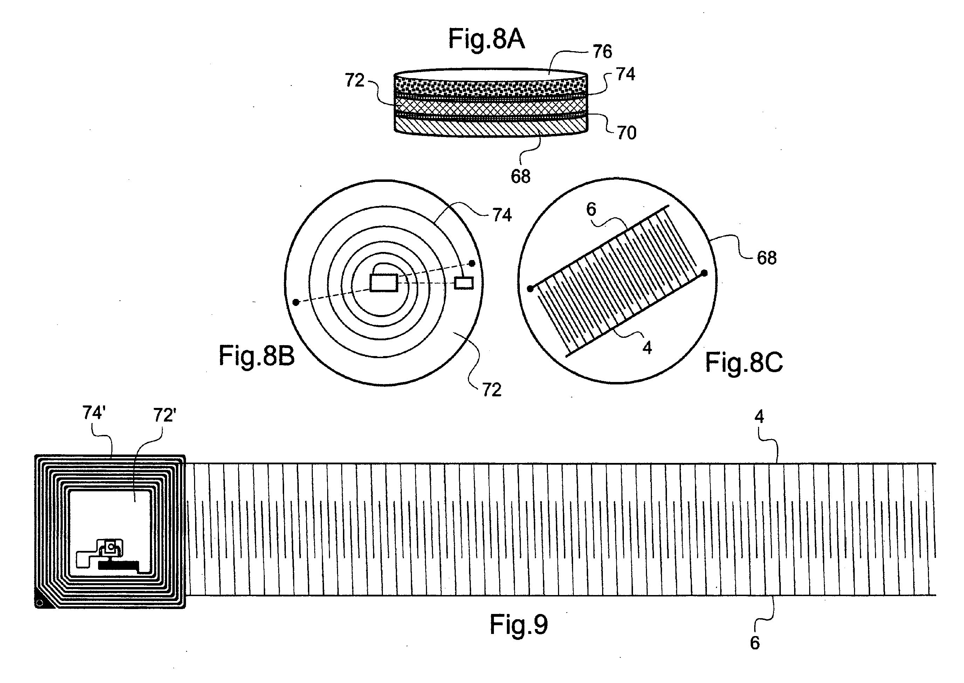

Les figures 8A, 8B et 8C illustrent une forme de réalisation d'un dispositif de mesure. On remarque sur la figure 8A que le dispositif de mesure se présente par exemple sous la forme d'une pastille cylindrique circulaire stratifiée. On reconnaît sur la figure 8A cinq disques de même diamètre superposés les uns aux autres.

À la base du dispositif de mesure se trouve un premier disque 68 au sein duquel sont intégrés l'anode 4 et la cathode 6. La figure 8C illustre un positionnement possible d'une anode 4 et d'une cathode 6 sous le premier disque 68. Un agencement similaire pour être utilisé pour deux anodes ou deux cathodes. Il est aussi possible de n'avoir qu'une seule électrode. Le dispositif des figures 8A à 8C correspond alors au premier ou au second ensemble selon l'invention. Chacune des électrodes (anode 4 et cathode 6) présente à la forme d'un peigne, les dents des deux peignes s'entre-enchevêtrant.

Ce premier disque 68 est recouvert d'une couche 70 d'un matériau qui assure à la fois une isolation électrique et thermique. Cette couche 70 permet d'isoler le premier disque 68 d'un second disque 72 qui se présente sous la forme d'une carte de circuit imprimé sur laquelle sont implantés les différents composants électroniques du dispositif de mesure de permittivité selon la présente invention et à la surface duquel est réalisée une antenne 74 en forme de spire. On réalise une liaison électrique de l'antenne 74 ainsi que de l'anode 4 et de la cathode 6 au niveau du second disque 72, ou plus précisément de la carte de circuit imprimé. Pour un ensemble selon l'invention, l'antenne 74 correspond à l'antenne reliée à l'anode 4 ou la cathode 6. La figure 8B illustre en vue de dessus le second disque 72 et l'antenne 74. Pour protéger cette dernière et l'ensemble du dispositif de mesure selon la présente invention, un surmoulage est réalisé formant ainsi une couche protectrice 76 d'un matériau isolant thermique.

La figure 9 illustre une variante de réalisation d'un dispositif de mesure envisageable pour la présente invention. Les différents composants (l'antenne, les composants électroniques et les électrodes) sont disposés sensiblement dans un même plan. Une carte de circuit imprimé 72' porte alors les divers composants électroniques du dispositif de mesure représenté, dont une antenne 74'. L'anode 4 et la cathode 6 sont ici en formes de peignes, les dents d'un peigne étant interposées entre les dents de l'autre peigne. Un dispositif selon l'invention comprend alors une ou deux anodes 4, ou une ou deux cathodes 6, de préférence en forme de peigne.

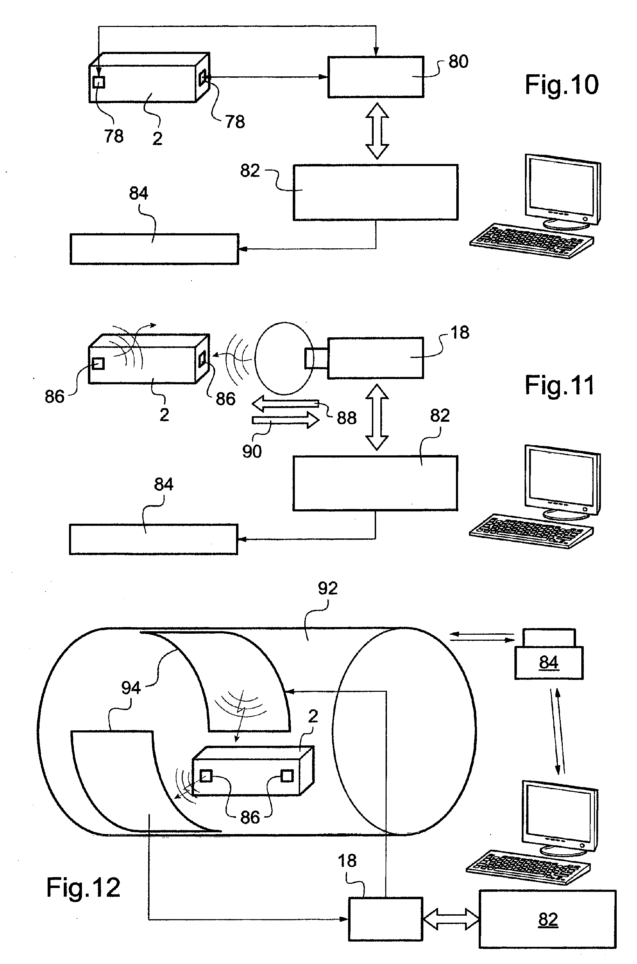

La figure 10 illustre un procédé de l'art antérieur permettant le contrôle de la polymérisation d'un composant 2 en matière composite. Dans cet exemple, on a représenté deux capteurs 78 disposés à la surface du composant 2. Chaque capteur 78 est en fait soit simplement une électrode, soit un ensemble de deux électrodes, par exemple deux électrodes similaires à celles illustrées sur les figures 8 et 9. Chaque capteur 78 est relié par fil à un boîtier interface 80. On retrouve par exemple dans ce boîtier des moyens électroniques équivalents aux moyens illustrés sur la figure 7 et correspondant au générateur de fréquence 56, à l'interface 54 et au convertisseur A/D 58. Ce boîtier interface 80 communique avec un ordinateur 82 au sein duquel est réalisée la mesure de permittivité souhaitée. Le résultat de cette mesure est alors transmis à un dispositif de gestion 84 qui contrôle les paramètres tels par exemple la température et la pression, auxquels est soumis le composant 2. On peut ainsi par exemple contrôler la polymérisation du matériau composite utilisé pour réaliser le composant 2.

La figure 11 illustre quant à elle un procédé utilisant un dispositif de mesure 86 disposé ici à la surface d'un composant 2, qui peut être en tout point similaire au composant 2 de la figure 10. Chaque ensemble du dispositif de mesure 86 correspond, comme expliqué plus haut, à une étiquette d'un système RFID. Il peut s'agir ici d'une étiquette passive ou active. Les ensembles du dispositif de mesure 86 sont utilisés pour réaliser une mesure de permittivité à travers tout le composant 2. Chaque ensemble du dispositif de mesure 86 comporte une seule électrode. On peut également avoir deux dispositifs de mesure tels ceux représentés sur les figures 8 et 9, c'est-à-dire comprenant les deux électrodes, et qui réalisent une mesure de conductivité pour connaître localement la permittivité du composant 2. Un lecteur 18 RFID correspondant au dispositif de mesure 86 est utilisé. Ce lecteur 18 transmet sans fil de l'énergie au dispositif de mesure comme illustré par une première flèche 88. L'énergie ainsi transmise permet au dispositif de mesure 86 de réaliser les mesures de permittivité. Les résultats de la mesure sont alors transmis au lecteur 18 comme illustré par la seconde flèche 90. Le lecteur 18 communique avec un ordinateur 82 et tous deux échangent des données par voie filaire ou non. Ici aussi, l'ordinateur 82 envoie les résultats des mesures effectuées à un dispositif de gestion 84 pour surveiller par exemple la polymérisation du matériau du composant 2.

Dans cette forme de réalisation, on peut avoir plusieurs types de dispositif de mesure 86 sur le composant 2. Il est possible d'avoir des dispositifs de mesure mesurant une conductivité globale à l'intérieur du composant 2 et/ou des dispositifs de mesure pour une mesure de conductivité locale. On peut bien entendu avoir plus de deux dispositifs de mesure 86 sur un même composant. C'est à cet effet qu'est prévu notamment le module anticollision 44 dans l'interface 26 illustré sur la figure 5.

La lecture des valeurs mesurées par les dispositifs de mesure 86 est gérée selon les besoins. Il est possible de réaliser plusieurs mesures, de les mémoriser et de transmettre un paquet de mesures à une fréquence prédéterminée (constante ou variable).

En variante de réalisation, la mesure étant effectuée au sein du dispositif de mesure 86, l'ordinateur 82 peut ne former qu'un seul ensemble de gestion avec le dispositif de gestion 84.

La figure 12 est une illustration d'une application du procédé illustré schématiquement sur la figure 11. Sur cette figure, on a représenté schématiquement un autoclave 92 utilisé pour la polymérisation du composant 2. On a représenté à l'intérieur de l'autoclave 92 deux antennes 94, qui sont par exemple à l'intérieur de l'autoclave et sont fixées sur la paroi interne de celui-ci. Ces antennes 94 sont reliées par fil au lecteur 18. Ces antennes 94 correspondent à l'antenne L' de la figure 6. Des données collectées par le lecteur 18 sont alors transmises à l'ordinateur 82 qui travaille en liaison avec le dispositif de gestion 84 de l'autoclave 92.

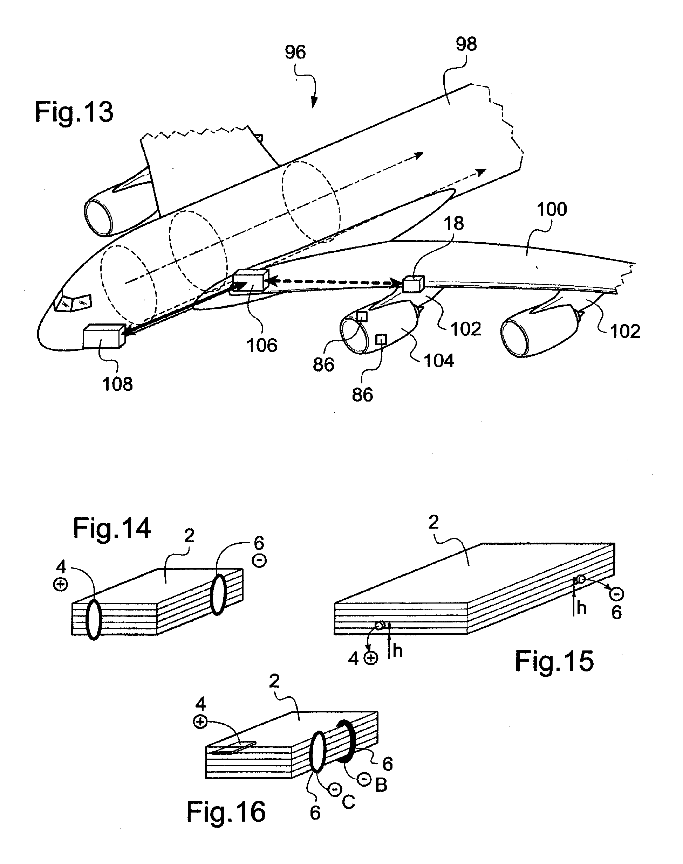

La figure 13 illustre une autre application de la présente invention dans le domaine aéronautique. On reconnaît sans mal sur la figure 13 une vue partielle d'un aéronef 96. Celui comporte un fuselage 98 porté par une voilure 100 sur laquelle sont fixés, par l'intermédiaire de mâts de liaison 102 des nacelles 104 à l'intérieur desquelles se trouvent à chaque fois un réacteur.

On suppose ici que chaque nacelle 104 est réalisée dans un matériau composite, par exemple, un matériau composite à base de fibres de carbone. Des dispositifs de mesures 86 selon un mode de réalisation de la présente invention sont disposés à la surface d'une nacelle 104. Il s'agit alors ici de préférence de dispositifs actifs. Il s'agit là d'un exemple de mode de réalisation, mais bien entendu on a de préférence des dispositifs de mesure 86 sur chacune des nacelles 104 de l'aéronef 96. Seuls deux dispositifs de mesure 86 sont représentés mais un bien plus grand nombre de dispositifs de mesure 86 peuvent être présents sur une nacelle 104.

Dans la forme de réalisation choisie ici un lecteur 18 est disposé sur la voilure 100 à proximité du mât de liaison 102 correspondant à la nacelle 104 surveillée. Le lecteur 18 est en liaison avec un transmetteur optoélectronique 106. Ce dernier est en liaison avec plusieurs lecteurs 18. Il reçoit ainsi les mesures réalisées par un grand nombre de dispositifs de mesures 86. Toutes les mesures connectées par le transmetteur optoélectronique 106 sont transférées vers le système avionique de l'aéronef. Ces données sont alors transférées à un module d'entrée/sortie 108 connu sous l'acronyme anglais CPIOM (pour Core Processor Input Output Module).

Il est alors possible de surveiller l'état de la nacelle 104 à tout moment lors de l'utilisation de l'aéronef. Toutes les options sont envisageables ici pour l'homme du métier. Il peut y avoir un contrôle continu de l'état du matériau constituant la nacelle 104. Cette dernière ne pouvant être réparée qu'au sol, on peut prévoir un contrôle de la nacelle 104 uniquement lorsque l'aéronef 96 est au sol. Il est également possible de prévoir des mesures lorsque l'aéronef 96 est en vol afin de programmer à l'avance déjà une éventuelle intervention au sol sur la nacelle 104. On peut également par exemple prévoir de réaliser des mesures lorsque des conditions d'utilisation extrêmes ont été observées par ailleurs. Étant donné que les capteurs permettant de contrôler l'état du matériau de la nacelle sont présents, il peut être envisagé de réaliser un contrôle à tout moment. La présente invention apporte ici une très grande souplesse d'utilisation et permet d'adapter les contrôles à réaliser a priori à tous les cahiers des charges envisageables.

Les figures 14 à 16 illustrent les possibilités de positionnement de l'anode 4 et de la cathode 6 d'un dispositif de mesure selon la présente invention sur un composant 2 en composite multicouche.

Sur la figure 14, l'anode 4 et la cathode 6 s'étendent sur un bord du composant 2, qui se présente sous la forme d'un panneau, sur toute la hauteur de celui-ci. L'anode 4 et la cathode 6 recouvrent ainsi plusieurs plis (ou couches) du composite, voire de préférence l'ensemble des plis du composant 2. On mesure alors ici la permittivité à travers tout le composant 2, d'un bord à un autre.

Dans l'illustration de la figure 15, l'anode 4 et la cathode 6 sont collées sur le composite, qui se présente sous la forme d'un panneau, sur une zone bien précise, à une hauteur h d'une face du composant 2 afin de réaliser une mesure de conductivité (équivalente à une mesure de permittivité) d'une zone bien précise du composant 2. L'anode 4 et la cathode 6 ne recouvrent, chacune, par exemple, qu'un seul pli du composite, ou sont à cheval sur deux plis consécutifs de sorte à couvrir leur interface ce qui permet de détecter une délamination entre ces plis.

Sur la figure 16, le dispositif comprend une anode 4 et deux cathodes 6 correspondantes. L'anode 4 est ici introduite dans une zone saturée en résine, i.e. entre deux plis. On suppose ici que le composant 2 est réalisé dans un matériau composite dans lequel des fibres, par exemple des fibres de carbone, sont noyées dans une résine que l'on a polymérisée. À cette anode 4 correspond l'une ou l'autre des cathodes 6B et 6C représentées. On peut également avoir une seule anode 4 pour les deux cathodes 6B et 6C. La cathode 6C est disposée perpendiculairement à l'anode 4. Elle est par exemple collée sur la tranche du composant 2. La cathode 6B est quant à elle par exemple fixée sur le composant 2 par accrochage mécanique. La cathode 6B forme ici une pince qui vient assurer un contact électrique avec des fibres du composites utilisés pour réaliser le composant 2.

L'invention telle que décrite ci-dessus permet ainsi de détecter une détérioration dans un matériau composite à l'aide de capteurs miniaturisés, intégrables dès la fabrication du matériau. Ces capteurs présentent des électrodes conductrices de l'électricité qui peuvent être disposées à la surface du matériau composite ou au coeur de celui-ci. Les capteurs ainsi intégrés lors de la fabrication du composite permettent de détecter toutes anomalies tant au cours des étapes de fabrication que lors de l'utilisation d'une structure réalisée avec le matériau composite concerné. Il est à préciser ici que les capteurs mis en place lors de la fabrication du matériau composite peuvent être soit des capteurs utilisés pour la détection d'anomalies lors de la fabrication du matériau, soit des capteurs utilisés pour la détection d'anomalies lors de l'utilisation dans la structure correspondante, soit des capteurs pouvant servir à la fois à la détection d'anomalies lors de la fabrication du matériau et lors de l'utilisation de la structure correspondante. On peut ainsi avoir sur une structure des capteurs de l'une, de deux ou de trois des catégories mentionnées.

La combinaison de ces capteurs à un système permettant une transmission de données sans fil et sans contact par exemple un système de type RFID, permet une lecture des données mesurées en continu ou à des intervalles prédéterminés ou en cours d'utilisation de la structure ou sur simple demande ponctuelle. Une très grande souplesse peut être obtenue ici.

Les applications mentionnées plus haut concernent plus particulièrement le domaine aéronautique mais des dispositifs de mesure selon la présente invention peuvent trouver des applications dans tous les domaines mettant en oeuvre des matériaux composites, et plus largement dans tout domaine dans lequel des mesures de conductivité électrique sont réalisées.

La présente invention permet ainsi de détecter des défauts dans le matériau analysé juste au niveau du capteur, dans la zone qui est en contact avec celui-ci, mais elle peut également s'appliquer pour la détection de défaut sur un volume de matériau plus important, disposé entre deux électrodes éloignées l'une de l'autre. En cours de fabrication, il est possible avec des capteurs selon la présente invention de détecter si la polymérisation de la résine utilisée se réalise de manière optimale (ou selon des conditions acceptables). Lors de l'utilisation d'une structure réalisée avec ce matériau, il est ensuite possible avec la présente invention de détecter un délaminage au coeur du matériau et/ou une infiltration de liquide et/ou une cassure.

La présente invention permet de réaliser une surveillance de la structure de matériaux composites comme encore jamais réalisée dans l'état de l'art antérieur. Ce contrôle au sein même de la matière peut être réalisé avec une très grande souplesse d'utilisation. Une fois les capteurs mis en place, la procédure de surveillance peut être adaptée à souhait et varier tout au long de la durée de vie de la structure. On remarque également que la présente invention permet de diminuer sensiblement les coûts liés au contrôle de pièces de structure en matières composites. Les dispositifs selon la présente invention peuvent être réalisés à des prix de revient tout à fait compétitif et utilisent des technologies éprouvées. Une grande fiabilité de mesure peut donc être obtenue.

## Revendications

1. Dispositif de mesure de permittivité électrique comportant une première électrode (4), une seconde électrode (6) distante de la première électrode, des moyens (56) permettant de créer un champ électrique à partir de la première électrode (4) et des moyens d'analyse (62, 64) d'un signal électrique reçu par la seconde électrode (6), des moyens de transmission (26) par radiofréquence de données, ainsi que des moyens de communication entre les moyens d'analyse (62, 64) d'un signal électrique reçu par la seconde électrode (6) et les moyens de transmission (26) par radiofréquence de données,
**caractérisé en ce qu'il** comporte :
- un premier ensemble comportant la première électrode (4), les moyens permettant de créer un champ électrique (56) (partir de la première électrode (4), ainsi qu'une première antenne (8) RFID associée à une première capacité (10), et
- un second ensemble comportant la seconde électrode (6), les moyens d'analyse (62, 64) du signal électrique reçu par la seconde électrode (6), ainsi qu'une deuxième antenne (12) RFID associée à une deuxième capacité (14).

2. Dispositif de mesure de permittivité électrique selon la revendication 1, **caractérisé en ce que** le premier ensemble comprend un microcontrôleur (22) intégrant au moins les moyens (56) permettant de créer un champ électrique et le second ensemble comprend un microcontrôleur (22) intégrant au moins les moyens d'analyse (62, 64) du signal électrique.

3. Dispositif de mesure de permittivité électrique selon l'une des revendications 1 ou 2, **caractérisé en ce qu'il** comporte une source d'alimentation en énergie (28) autonome.

4. Dispositif de mesure de permittivité électrique selon l'une des revendications 1 à 3, **caractérisé en ce que** le premier ensemble se présente sous une forme étagée avec un premier niveau (68) comportant la première électrode (4), un second niveau (72) comportant une antenne (74) plane, et **en ce qu'**une couche (70) de matériau isolant électrique est disposée entre le premier niveau (68) et le second niveau (72), et **en ce que** le second niveau (72) est recouvert d'un matériau isolant thermique (76).

5. Dispositif de mesure de permittivité électrique selon l'une des revendications 1 à 4, **caractérisé en ce que** le second ensemble se présente sous une forme étagée avec un premier niveau (68) comportant la deuxième électrode (6), et avec un second niveau (72) comportant une antenne (74) plane, et **en ce qu'**une couche (70) de matériau isolant électrique est disposée entre le premier niveau (68) et le second niveau (72), et **en ce que** le second niveau (72) est recouvert d'un matériau isolant thermique (76).

6. Dispositif de mesure de permittivité électrique selon l'une des revendications 1 à 5, **caractérisé en ce que** le premier ensemble et le second ensemble sont reliés tous deux à une masse commune.

7. Composant (2) réalisé en matériau synthétique composite, **caractérisé en ce qu'il** comporte au moins un dispositif de mesure (86) de permittivité électrique selon l'une des revendications 1 à 6.

8. Composant (2) selon la revendication 7, **caractérisé en ce que** le matériau synthétique composite comprend au moins deux plis, et **en ce que** l'anode (4) et la cathode (6) recouvrent chacune au moins partiellement un pli.

9. Composant (2) selon la revendication 7, **caractérisé en ce que** le matériau synthétique composite comprend au moins deux plis, et **en ce que** l'anode (4) est située entre deux des plis.

10. Composant (2) selon l'une des revendications 7 ou 9, **caractérisé en ce que** le matériau synthétique composite comprend au moins deux plis, et **en ce que** la cathode (6) est située entre deux des plis.

11. Aéronef, **caractérisé en ce qu'il** intègre au moins un composant (2) réalisé en matériau synthétique composite selon l'une des revendications 7 à 10.

## Patentansprüche

1. Vorrichtung zum Messen der elektrischen Permittivität, enthaltend eine erste Elektrode (4), eine von der ersten Elektrode beabstandete zweite Elektrode (6), Mittel (56) zum Erzeugen eines elektrischen Feldes ausgehend von der ersten Elektrode (4) und Mittel (62, 64) zum Analysieren eines elektrischen Signals, das von der zweiten Elektrode (6) empfangen wurde, Mittel (26) zum Übertragen von Daten mit Hochfrequenz sowie Mittel zum Kommunizieren zwischen den Mitteln (62, 64) zum Analysieren eines von der zweiten Elektrode (6) empfangenen elektrischen Signals und den Mitteln (26) zum Übertragen von Daten mit Hochfrequenz,
**dadurch gekennzeichnet, dass** sie enthält:
- eine erste Baugruppe mit der ersten Elektrode (4), den Mitteln zum Erzeugen eines elektrischen Feldes (56) ausgehend von der ersten Elektrode (4) sowie eine erste RFID-Antenne (8), der eine erste Kapazität (10) zugeordnet ist, und
- eine zweite Baugruppe mit der zweiten Elektrode (6), den Mitteln (62, 64) zum Analysieren des von der zweiten Elektrode (6) empfangenen elektrischen Signals sowie eine zweite RFID-Antenne (12), der eine zweite Kapazität (14) zugeordnet ist.

2. Vorrichtung zum Messen der elektrischen Permittivität nach Anspruch 1, **dadurch gekennzeichnet, dass** die erste Baugruppe einen Mikrokontroller (22) aufweist, der zumindest die Mittel (56) zum Erzeugen eines elektrischen Feldes umfasst, und die zweite Baugruppe einen Mikrokontroller (22) aufweist, der zumindest die Mittel (62, 64) zum Analysieren des elektrischen Signals umfasst.

3. Vorrichtung zum Messen der elektrischen Permittivität nach einem der Ansprüche 1 oder 2, **dadurch gekennzeichnet, dass** sie eine autonome Energieversorgungsquelle (28) aufweist.

4. Vorrichtung zum Messen der elektrischen Permittivität nach einem der Ansprüche 1 bis 3, **dadurch gekennzeichnet, dass** die erste Baugruppe in abgestufter Form mit einer ersten Ebene (68), die die erste Elektrode (4) enthält, und mit einer zweiten Ebene (72) vorliegt, welche eine Flachantenne (74) enthält, und dass eine Schicht (70) aus elektrisch isolierendem Material zwischen der ersten Ebene (68) und der zweiten Ebene (72) angeordnet ist und dass die zweite Ebene (72) mit einem wärmeisolierenden Material (76) überdeckt ist.

5. Vorrichtung zum Messen der elektrischen Permittivität nach einem der Ansprüche 1 bis 4, **dadurch gekennzeichnet, dass** die zweite Baugruppe in abgestufter Form mit einer ersten Ebene (68), die die zweite Elektrode (6) enthält, und mit einer zweiten Ebene (72) vorliegt, welche eine Flachantenne (74) enthält, und dass eine Schicht (70) aus elektrisch isolierendem Material zwischen der ersten Ebene (68) und der zweiten Ebene (72) angeordnet ist und dass die zweite Ebene (72) mit einem wärmeisolierenden Material (76) überdeckt ist.

6. Vorrichtung zum Messen der elektrischen Permittivität nach einem der Ansprüche 1 bis 5, **dadurch gekennzeichnet, dass** die erste Baugruppe und die zweite Baugruppe beide mit einer gemeinsamen Masse verbunden sind.

7. Bauteil (2), das aus synthetischem Verbundmaterial hergestellt ist, **dadurch gekennzeichnet, dass** es zumindest eine Vorrichtung (86) zum Messen der elektrischen Permittivität nach einem der Ansprüche 1 bis 6 aufweist.

8. Bauteil (2) nach Anspruch 7, **dadurch gekennzeichnet**, dassdas synthetische Verbundmaterial zumindest zwei Lagen aufweist und dass die Anode (4) und die Kathode (6) jeweils zumindest teilweise eine Lage überdecken.

9. Bauteil (2) nach Anspruch 7, **dadurch gekennzeichnet**, dassdas synthetische Verbundmaterial zumindest zwei Lagen aufweist und dass die Anode (4) zwischen zwei der Lagen liegt.

10. Bauteil (2) nach einem der Ansprüche 7 oder 9, **dadurch gekennzeichnet, dass** das synthetische Verbundmaterial zumindest zwei Lagen aufweist und dass die Kathode (6) zwischen zwei der Lagen liegt.

11. Luftfahrzeug, **dadurch gekennzeichnet, dass** es zumindest ein Bauteil (2), das aus synthetischem Verbundmaterial hergestellt ist, nach einem der Ansprüche 7 bis 10 umfasst.

## Claims

1. A device for measuring electrical permittivity comprising a first electrode (4), a second electrode (6) remote from the first electrode, means (56) making it possible to create an electric field from the first electrode (4) and analyzing means (62, 64) for analyzing an electrical signal received by the second electrode (6), radiofrequency data transmission means (26), as well as means for communication between the analyzing means (62, 64) for analyzing an electrical signal received by the second electrode (6) and the radiofrequency data transmission means (26),
**characterized in that** it comprises:
- a first assembly comprising a first electrode (4), means (56) for creating an electric field from the first electrode (4), as well as a first RFID antenna (8) associated with a first capacitance (10), and
- a second assembly comprising the second electrode (6), the analyzing means (62, 64) for analyzing the electrical signal received by the second electrode (6), as well as a second RFID antenna (12) associated with a second capacitance (14).

2. A device for measuring electrical permittivity according to claim 1, **characterized in that** the first assembly comprises a microcontroller (22) incorporating at least the means (56) for creating an electric field and the second assembly comprises a microcontroller (22) incorporating at least the analyzing means (62, 64) for analyzing the electrical signal.

3. A device for measuring electrical permittivity according to one of claims 1 or 2, **characterized in that** it comprises an autonomous energy supply (28).

4. A device for measuring electrical permittivity according to one of claims 1 to 3, **characterized in that** the first assembly has a tiered form with a first level (68) comprising the first electrode (4), a second level (72) comprising a flat antenna (74), and **in that** a layer (70) of electrically insulating material is disposed between the first level (68) and the second level (72), and **in that** the second level (72) is covered with a thermally insulating material (76).

5. A device for measuring electrical permittivity according to one of claims 1 to 4, **characterized in that** the second assembly has a tiered form with a first level (68) comprising the second electrode (6), and with a second level (72) comprising a flat antenna (74), and **in that** a layer (70) of electrically insulating material is disposed between the first level (68) and the second level (72), and **in that** the second level (72) is covered with a thermally insulating material (76).

6. A device for measuring electrical permittivity according to one of claims 1 to 5, **characterized in that** the first assembly and the second assembly are both linked to a common earth.

7. A component (2) formed from composite synthetic material, characterized in thatit comprises at least one electrical permittivity measuring device (86) according to one of claims 1 to 6.

8. A component (2) according to claim 7, **characterized in that** the composite synthetic material comprises at least two plies, and **in that** the anode (4) and the cathode (6) each covers a ply at least partially.

9. A component (2) according to claim 7, **characterized in that** the composite synthetic material comprises at least two plies, and **in that** the anode (4) is situated between two of the plies.

10. A component (2) according to one of claims 7 or 9, **characterized in that** the composite synthetic material comprises at least two plies, and **in that** the cathode (6) is situated between two of the plies.

11. An aircraft, **characterized in that** it incorporates at least one component (2) formed from composite synthetic material according to one of claims 7 to 10.
